# EUROPEAN PATENT SPECIFICATION

(11) **EP 2 475 601 B1**
(45) Date of publication and mention of the grant of the patent: **29.01.2014**
(21) Application number: 10779065.1
(22) Date of filing: 06.09.2010
(51) Int. Cl.: B65G 47/252

(54) **BED CLOSURE SYSTEM**
BETTVERSCHLUSSSYSTEM
SYSTÈME DE FERMETURE DE LIT

(30) Priority: 08.09.2009 TR 200906914
(43) Date of publication of application: 18.07.2012
(73) Proprietor: Umit, Ergin, 34590 Istanbul (TR)
(72) Inventor: SUSEVER, Mahmut Zeki, 34590 Istanbul (TR)
(74) Representative: Iskender, Ibrahim
(86) International application number: PCT/TR2010/000177
(87) International publication number: WO 2011/031247

(56) References cited:
- EP-A1- 0 682 135
- EP-A2- 0 848 098
- JP-A- 52 044 968
- JP-U- 48 039 673
- US-A- 5 908 004

## Description

### The Related Art

The invention relates to a system providing rotation of bed and turning of the bed corner during sewing, which are applied in bed closure (coating sewing) machines used in bed production facilities.

The present invention relates to a bed closure system according to the preamble of claim 1 comprising a bed rotating machine, which makes the tumbling operation of bed during bed closure in modern facilities an automatic process, and eliminates the problems of controlling of the bed by the operator and dropping of the bed on the sewing head during the tumbling operation since one edge of the bed goes down to the ground level, and a corner turning machine providing more stable and vibrationless turning with less power.

### Background of the Invention

Presently used closure systems are divided into two categories as manual and automatic. Since line type production is conducted in modern facilities, automatic closure machines are preferred. In the present automatic closure systems, tumbling operation of the bed is carried out by tumbling of the bed after being lifted on one of its edges on the bed rotating machine conveyor. This system requires supervision of the bed by the operator during entire operation. At the same time, attention has to be given to the risk of dropping of the bed on the sewing head during tumbling.

In the corner turning machine, driving of the turning arm is made with a powerful reducer and it causes excessive energy consumption since the centre of motion is found at the reducer output centre. Using of such excessive power leads to mechanical spaces between the turning arm and the reducer. Also leads to vibration during stopping and starting. These vibrations negatively affect the quality of sewing.

The utility model application with no TR 2006 02088 relates to bed edge sewing machine having the property of stitching fusing, wadding, foam, fibre, fabric from the edge of the side border of bed at the side part of the spring frame of beds. The stitching operation is conducted by transfer of energy to the motion gear of the motion reducer around the main body by the movable body and by skidding of the ball bearings found on the skidder system positioned appropriately on the V skidder. The appropriate sewing position of the bed edge of the sewing machine is obtained by adjustment of the connection apparatus of the sewing machine via adjustment bolt. Transfer of energy to the sewing operation and the movement of the movable body are obtained by function pedals. Transfer of energy to the sewing machine is obtained via the belt pulley from the reducer positioned below the connection apparatus of the sewing machine.

The patent application with no EP 0848098 A2 relates to matress sewing and handling apparatus. It comprises two conveyor belts (12, 14) which enable the bed to be located thereon and to be carried in forward and backward. Preferably one of these belts (12) has the same width as the other (14) but it is composed of two different bands (12a, 12b) between which the pivoting support member (72) of the bed flipping mechanism (70) is located. After the sewing of sides and corners of the one side of bed is completed, bed is brought to a standing position on one of its edges via pivoting support member (72) and the bed is pushed forward such that the surface to be sewed faces up on the other belt (14). Pivoting support member (72) does not have the same width as the surface of bed which it gets in contact. Therefore, during the above-mentioned process of turning upside down the bed may slip away and fall down so it may not be possible to locate it properly on the belt (14). An operator's supervision and control is needed in order to prevent these problems. Additionally side rail (24) which rotates automatically is used during the sewing of of bed corners. But it does not have any novelty which provides lower power consumption by the corner sewing machine.

As a result, the need for a bed closure system, which eliminates the disadvantages of the prior art, which is developed in order to provide sewing and closure of the bed in a vibrationless and sound manner different from the previous applications, and which comprises a bed rotating machine and a corner turning machine for obtaining more stable and vibrationless turning with less power, and the inadequacy of the present solutions have necessitated an improvement in the related technical field.

### Purpose of the Invention

From the known status of the art, purpose of the invention is to develop a bed closure system comprising a bed rotating machine and a corner turning machine in order to provide sewing and closure of the bed in a vibrationless and quality manner different from the above disclosed negative situations.

Another purpose of the invention is to develop a bed closure system eliminating the problems of dropping of the bed on the sewing head during the tumbling operation since one edge of the bed goes down to the ground level and controlling of the bed by the operator.

Another purpose of the invention is to provide saving from the energy used. The corner turning arm is only embedded at the turning centre and driving of turning is conducted from the level of the end of the turning arm (from support point) via a belt with steel wire instead of this centre. Therefore, use of power is decreased by the help of the lever arm positioned between the turning centre and the end.

Another purpose of the invention is to develop a bed closure system, which provides more automatic, quicker, and more quality sewing.

Another purpose of the invention is to develop a bed closure system, which would not require supervision of the bed by the operator during application, and which thus minimizes the loss of time and labour.

In order to achieve the above said purposes, a bed closure system is developed according to claim 1.

In a preferred application of the invention, said motion transfer mean is belt with steel wire.

The structural and characteristic features of the invention and all advantages will be understood better in detailed descriptions with the figures given below and with reference to the figures, and therefore, the assessment should be made taking into account the said figures and detailed explanations.

### Figures for Better Understanding of the Invention

Figure-1; is the top perspective view of a preferred embodiment of the bed closure system, which is the subject of the invention, while the bed is entering in the system.
Figure-2; is the top perspective view of a preferred embodiment of the bed closure system, which is the subject of the invention, while the bed is entering in the sewing conveyor.
Figure-3; is the top perspective view of a preferred embodiment of the bed closure system, which is the subject of the invention, while the bed is entering in the bed corner turning machine.
Figure-4; is the top perspective view of a preferred embodiment of the bed closure system, which is the subject of the invention, while the second conveyor belt is at the lowest level just before the bed is rotated.
Figure-5; is the top perspective view of a preferred embodiment of the bed closure system, which is the subject of the invention, in the first stage during the bed is being rotated.
Figure-6; is the top perspective view of a preferred embodiment of the bed closure system, which is the subject of the invention, in the last stage during the bed is being rotated.
Figure-7; is the top perspective view of a preferred embodiment of the bed closure system, which is the subject of the invention, when the bed is rotated and the second conveyor belt is at the upper level.
Figure-8; is the top perspective view of a preferred embodiment of the bed closure system, which is the subject of the invention, while the bed is entering into the sewing conveyor for sewing of its rotated face.

### Parts Numbers

10- Bed Rotating Machine
11- First Conveyor Belt
12- Second Conveyor Belt
13- Piston
14- Piston
15- Receiving Metal Sheet
16- Idle Cylinder
17- Third Conveyor Belt (Sewing Conveyor)
18- Piston
20- Corner Turning Machine
21- Lever Arm
22- Corner Turning Arm
23- Turning Panel
23.1- Pulley
24- Fixation Arm
25- Motion Transfer Mean
26- Engine
27- Reducer
28- Turning Centre
29- Support Point
30- Bed
A- Upper Side of Bed (enter side to system)
B- Below Side of Bed (exit side to system)

### Detailed Description of the Invention

In this detailed description, the preferred embodiments of the bed closure system, which is the subject of the invention, will only be disclosed for better understanding of the subject, and will not form any limiting effect. Moreover, the motions of the bands (11, 12, 17), or in other words, their turning directions are shown with arrows.

In Figure-1, the top perspective view of a preferred embodiment of the bed closure system, which is the subject of the invention, is given in a position while the bed (30) is entering in the system. The closure system is used in sewing of the textile lined at the last stage on the beds (30) produced in the bed (30) production facilities and it is basically formed of a bed rotating machine (10) and a corner turning machine (20) connected to the said rotating machine (10).

The closure operation is carried out by movement of the bed (30) on three carrier belts. Starting from the entrance direction, the said bed rotating machine (10) comprises; the first conveyor belt (11), the second conveyor belt (12), a receiving metal sheet (15) which is positioned fixedly below the second conveyor belt (12), an idle cylinder (16) comprising piston (18), and the third conveyor belt (17) which is also called as sewing conveyor.

The said first conveyor belt (11) prevents the bed (30) from getting off the machine (10) and supports the rear part of the bed (30) in large beds (30). The movable second conveyor belt (12) providing tumbling of the bed (30) and following the first conveyor belt (11) is designed in a way that it would descend and rise to the minimum and maximum heights in two stages with the pistons (13, 14) via its cylinders found at the entrance part and the cylinders found at the other side which is centrally fixed. The third conveyor belt (17) is rather the conveyor, on which the sewing is made and the corner turning arm (22) operates.

While the system starts to operate, bed (30) is called over the line with A face becomes top face. The bed (30) found in queue on the line, firstly comes on the first conveyor belt (11). At this moment, since the second conveyor belt (12) is found at the upper level, the bed (30) goes over this belt and comes on the third conveyor belt (17).

In Figure-2, the top perspective view of a preferred embodiment of the bed closure system, which is the subject of the invention, is given in a position while the bed (30) is entering in the sewing conveyor (17). There is no need for intervention of the operator the bed (30) till that moment. The operator, who has finished the sewing preparations, starts the sewing of the upper corner of the bed (30). When the corner of the bed (30) is reached, with the bed (30) going off from the front of the corner sensor, the sewing head slows down by achieving the predetermined corner speed on the turning panel (23).

In Figure-3, the top perspective view of a preferred embodiment of the bed closure system, which is the subject of the invention, is given in a position while the bed (30) is entering in the bed corner turning machine (20). When the bed (30) gets off the second sensor, the fixation arms (24) found on the corner turning arm (22) hold the bed (30) by pressing on it. Afterwards, the lever arm (21) operating via the motion transfer means (25) turns the bed (30) ninety degrees in the direction of arrow at the corner turning speed determined at the turning panel (23) having quarter circle shape. Here, a reducer (27) is found, which transmits the motion it takes from the engine (26) to the motion transfer means (25). When the rotation is completed, the sewing head again goes up to normal sewing speed. When the sewing at this face (A face) of the bed (30) is completed, the operator presses the tumble button in order to rotate to the other face (B face) of the bed (30). Therefore, the system is positioned as in Figure-4.

In Figure-4, the top perspective view of a preferred embodiment of the bed closure system, which is the subject of the invention, is given in a position while the second conveyor belt (12) is at the lowest level just before the bed (30) is rotated. Bed (30) rotating (tumble) operation firstly starts with lowering of the second conveyor belt (12), which is found at the centre, two levels at once. When the said lowering operation of the second conveyor belt (12) finishes, the third conveyor belt (17) carries the bed (30) to the second conveyor belt (12) by rotating in backwards direction.

In Figure-5, the top perspective view of a preferred embodiment of the bed closure system, which is the subject of the invention, is given in a position in the first stage during the bed (30) is being rotated. At the moment, when the gravity centre of the bed (30) passes the idle cylinder (16), the edge of the bed (30) goes downwards. At the moment when the end of the bed (30) touches on the second conveyor belt (12), one cylinder of which found at one side of it has been lowered, the second conveyor belt (12) moving forwards pushes the end of the bed (30) in a way that the bed (30) will be vertical to the ground. The bottom end of the bed (30) which is coming into vertical position goes down on the receiving metal sheet (15). In this position, A face of bed (30) overlies on the second conveyor belt (12).

In Figure-6, the top perspective view of a preferred embodiment of the bed closure system, which is the subject of the invention, is given in a position in the last stage during the bed (30) is being rotated. When the bed (30) is detected by the sensor to reach the vertical position, it drops on the second conveyor belt (12) as a result of pushing of the idle cylinder (16) forwards via piston (18). While slipping of the bed (30) over the belt (12) is being prevented via the receiving metal sheet (15); it protects its position by having friction with the receiving metal sheet (15) until the second conveyor (12) rises to the first level. The second conveyor belt (12) found at the said first level position is shown in Figure-6. The second conveyor belt (12) rising to the first level pulls the bed (30) about 20 to 25 centimetres backwards and thus prevents it from getting stuck with the idle cylinder (16) while being risen. Meanwhile, B face of bed (30) becomes top face.

In Figure-7, the top perspective view of a preferred embodiment of the bed closure system, which is the subject of the invention, is given in a position when the bed (30) is rotated and the second conveyor belt (12) is at the upper level. The second conveyor belt (12) completes its rising by reaching the second level.

In Figure-8, the top perspective view of a preferred embodiment of the bed closure system, which is the subject of the invention, is given in a position while the bed (30) is entering into the sewing conveyor (17) for sewing of its rotated B face. The bed (30) found on the second conveyor belt (12) which has completed its rising automatically goes to the third conveyor belt (17) (sewing area).

Lower power is used in the system newly used in corner turnings during bed (30) sewing than the prior system and a more stable and vibrationless turning is obtained. The greatest advantage of the new system is being able to take the force application point away from the turning centre (28) by extending the lever arm (21) (See Figure-3). Below said lever arm (21), there is a motion transfer means (25) connected between the turning centre (28) and the support point (29). Here, the said motion transfer means (25) is preferably belt with steel wire.

The lever arm (21), which operates via the drive of the motion transfer means (25) moving on a quarter circle formed of belt limitation pulleys (23.1) arranged on the turning panel (23), transmits the motion to the corner turning arm (22) through the motion (turning) centre (28).

The protection scope of this application has been specified under claims and cannot be limited to the descriptions only given as sampling above. It is obvious that a person skilled in the related art can apply the innovation disclosed by this invention into similar purposed other areas by means of changing the parts in form and using similar structures. Therefore, it is also clear that such embodiments lack of novelty and especially the inventive step criteria.

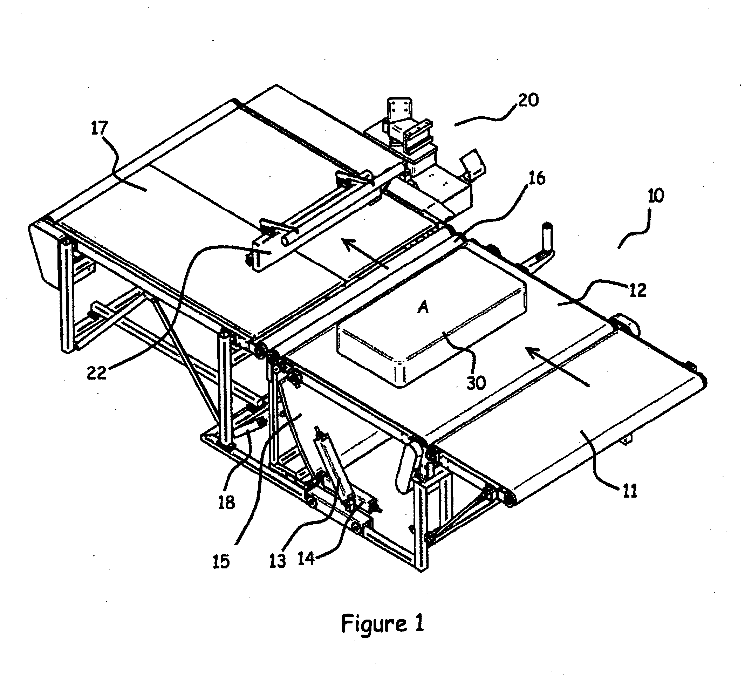

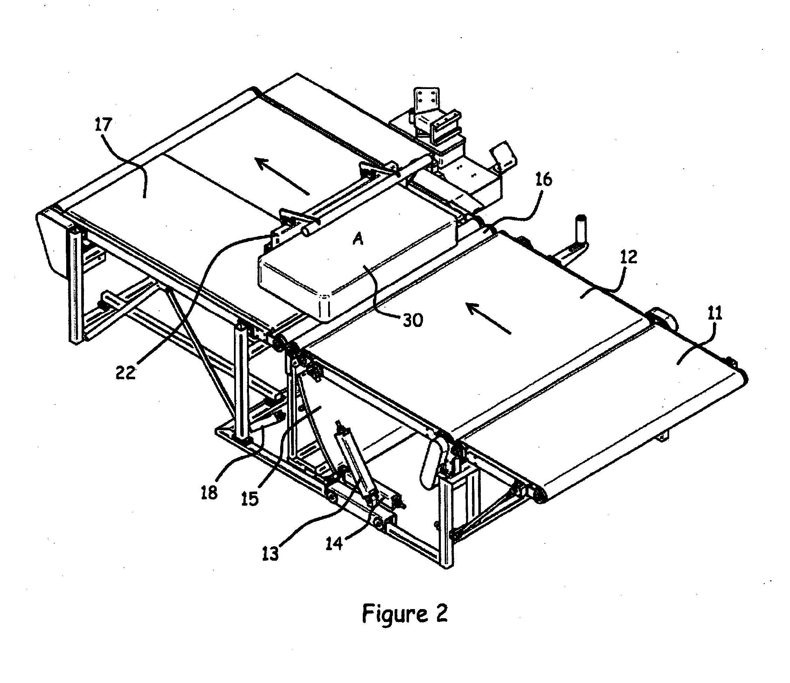

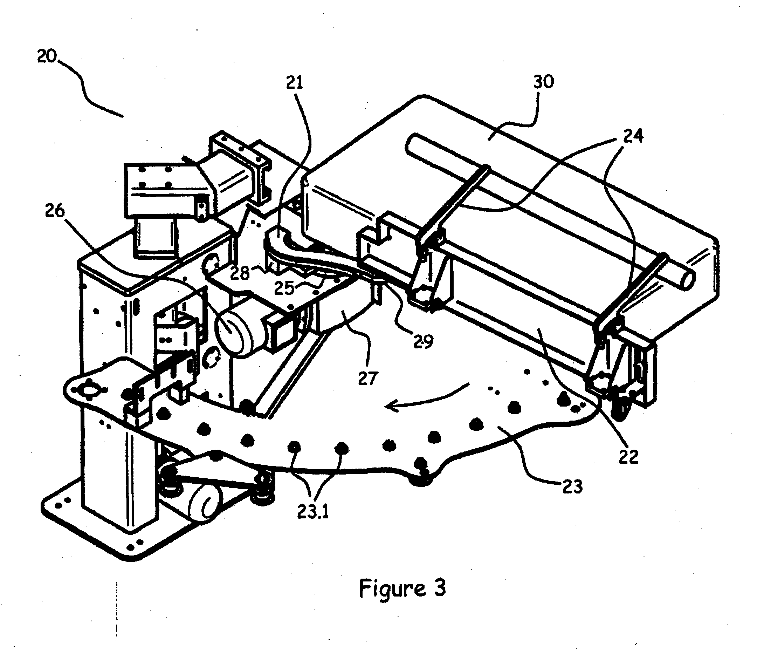

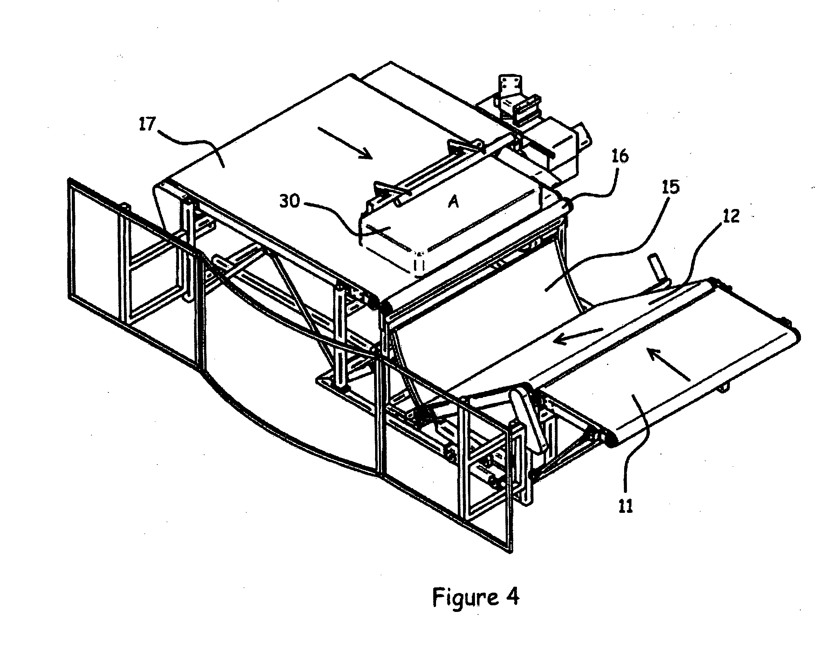

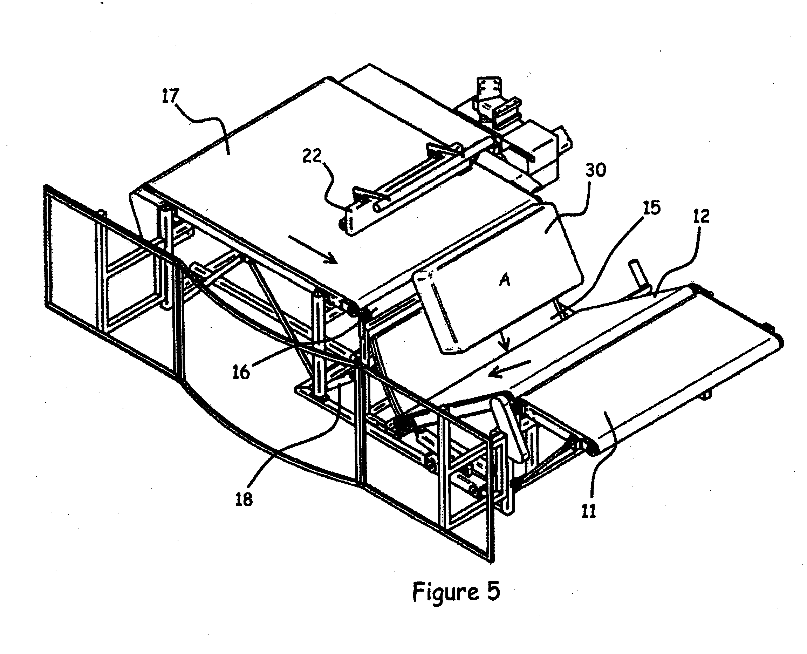

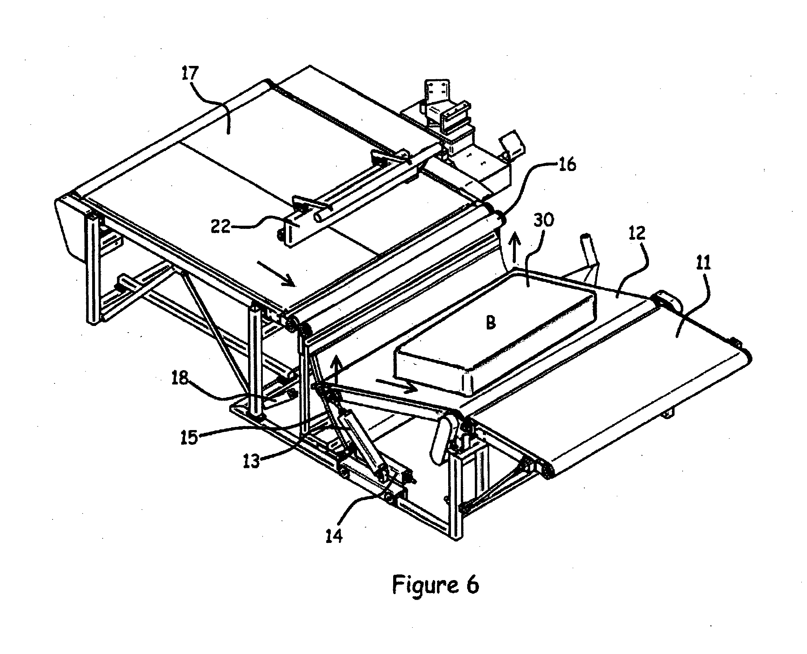

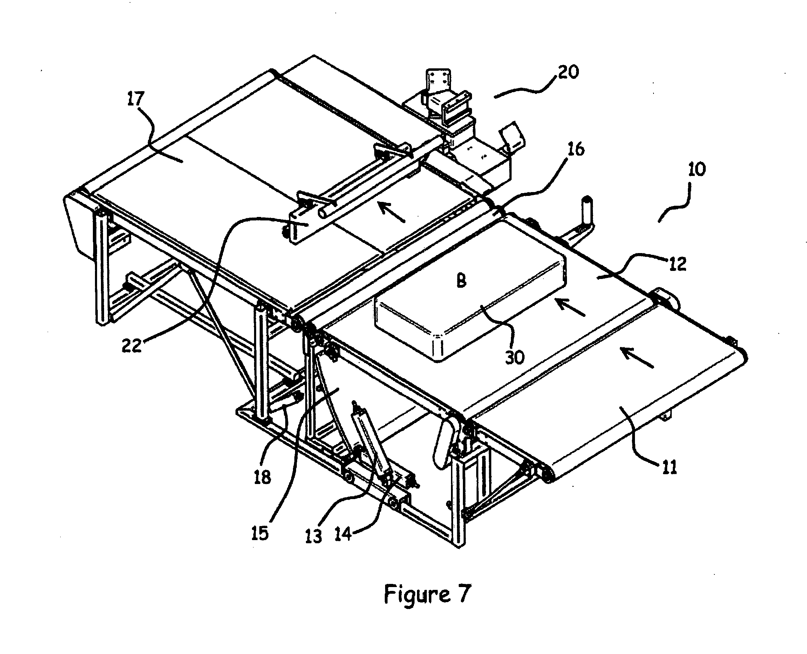

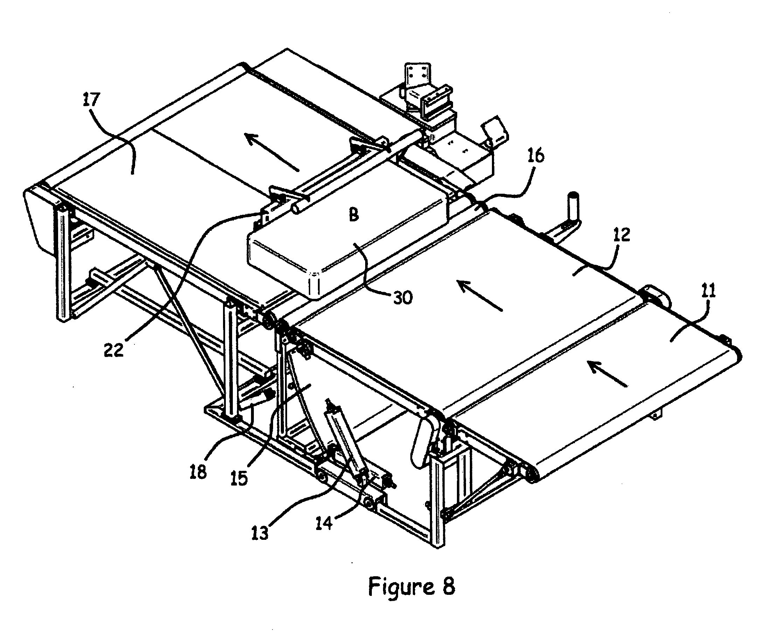

## Claims

1. A bed closure system, which is developed for accomplishing bed (30) sewing in bed (30) production facilities, and which comprises a first conveyor belt (11) in order to prevent the bed (30) from getting off the machine (10) and support the rear part of the bed (30) in large beds (30) and a third conveyor belt (17) on which sewing is carried out, comprising:
- a corner turning machine (20) at the third conveyor belt (17) comprising; lever arm (21) operating by drive of a motion transfer means (25) in order to take a corner turning arm (22) away from the rotation centre (28),
- a bed rotating machine (10) comprising; second conveyor belt (12) following the first conveyor belt (11) and providing tumbling of the bed (30) by being lowered and risen by a cylinder found at one end of it via pistons (13, 14), **characterised in that** the bed rotating machine (10) comprises: a receiving metal sheet (15), which is positioned fixedly below the second conveyor belt (12), for receiving the bed (30) coming from the third conveyor belt (17) before tumbling of the bed (30), an idle cylinder (16) comprising a piston (18) positioned between the third conveyor belt (17) and second conveyor belt (12) when the second conveyor belt (12) is in the risen position, in order to drop the bed (30) on the second conveyor belt (12) by pushing it via the piston (18).

2. A bed closure system according to Claim 1, wherein the said motion transfer mean (25) is a belt with steel wire.

## Patentansprüche

1. Bettverschlusssystem, das zum Durchführen des Nähens eines Betts (30) in Herstellungseinrichtungen für ein Bett (30) konzipiert ist und ein erstes Förderband (11), um zu verhindern, dass das Bett (30) von der Maschine (10) entfernt wird, und den hinteren Teil des Betts (30) in großen Betten (30) zu stützen, und ein drittes Förderband (17) umfasst, auf dem das Nähen ausgeführt wird, umfassend:
- eine Eckendrehmaschine (20) an dem dritten Förderband (17), umfassend: einen Hebelarm (21), der durch den Antrieb eines Bewegungsübertragungsmittels (25) betätigt wird, um einen Eckendreharm (22) von dem Drehzentrum (28) zu entfernen,
- eine Bettdrehmaschine (10), umfassend: ein zweites Förderband (12), das dem ersten Förderband (11) folgt und das Taumeln des Bettes (30) bereitstellt, indem es von einem Zylinder, der an einem Ende davon angeordnet ist, über Kolben (13, 14) abgesenkt und angehoben wird,
**dadurch gekennzeichnet, dass** die Bettdrehmaschine (10) Folgendes umfasst:
ein Aufnahmemetallblech (15), das fest unter dem zweiten Förderband (12) zum Aufnehmen des Betts (30) angeordnet ist, das aus dem dritten Förderband (17) vor dem Taumeln des Betts (30) kommt, wobei ein ruhender Zylinder (16) einen Kolben (18) umfasst, der zwischen dem dritten Förderband (17) und dem zweiten Förderband (12) angeordnet ist, wenn sich das zweite Förderband (12) in der angehobenen Position befindet, um das Bett (30) auf dem zweiten Förderband (12) abzulegen, indem es durch die Kolben (18) geschoben wird.

2. Bettverschlusssystem nach Anspruch 1, wobei das Bewegungsübertragungsmittel (25) ein Band mit Stahldraht ist.

## Revendications

1. Système de fermeture de banc, qui est développé pour réaliser des équipements de production de couture sur banc (30) sur un banc (30) et qui comprend une première bande transporteuse (11) afin d'éviter la sortie du banc (30) de la machine (10) et de supporter la partie arrière du banc (30) sur de grands bancs (30) et une troisième bande transporteuse (17) sur laquelle la couture est effectuée, comprenant :
- une machine de retournement de coins (20) comprenant : un bras de levier (21) fonctionnant par entraînement d'un moyen de transfert de mouvement (25) en vue d'éloigner un bras de retournement de coins (22) du centre de rotation (28),
- une machine de rotation de banc (10) comprenant : une deuxième bande transporteuse (12) suivant la première bande transporteuse (11) et assurant un culbutage du banc (30) du fait qu'il est abaissé et levé par un vérin se trouvant à une de ses extrémités via des pistons (13, 14),
**caractérisé en ce que** la machine de rotation de banc (10) comprend :
- un feuillard métallique récepteur (15) qui est positionné fixement en-dessous de la deuxième bande transporteuse (12) pour recevoir le banc (30) venant de la troisième bande transporteuse (17) avant le culbutage du banc (30), un cylindre libre (16) comprenant un piston (18) positionné entre la troisième bande transporteuse (17) et la deuxième bande transporteuse (12) pour faire tomber le banc (30) sur la deuxième bande transporteuse (12) en la poussant via le piston (18) au niveau de la troisième bande transporteuse (17).

2. Système de fermeture de banc selon la revendication 1, dans lequel ledit moyen de transfert de mouvement (25) est une bande contenant du fil d'acier.
